Europäisches Patentamt

European Patent Office

Office européen des brevets

(19)

(11)     EP 0 684 485 B1

(12)     FASCICULE DE BREVET EUROPEEN

(45) Date de publication et mention
de la délivrance du brevet:
**03.04.2002   Bulletin 2002/14**

(51) Int Cl.⁷: **G01S 5/28**, G01S 3/808,
G01S 11/14, F41G 3/14

(21) Numéro de dépôt: **95420133.1**

(22) Date de dépôt: **23.05.1995**

(54) **Procédé et système pour localiser une arme à feu à partir d'une détection acoustique**

Verfahren und System zur Positionsbestimmung einer Schusswaffe mittels einer akustischer Detektion

Method and system to localize a firearm using an acoustic detection

(84) Etats contractants désignés:
**DE GB**

(30) Priorité:  **27.05.1994  FR 9406729**

(43) Date de publication de la demande:
**29.11.1995   Bulletin 1995/48**

(73) Titulaire: **METRAVIB R.D.S. Société Anonyme
69760 Limonest (FR)**

(72) Inventeurs:
  • **Permuy, Alfred
    F-92500 Rueil Malmaison (FR)**

  • **Vimort, Pierre-Henri
    F-69130 Ecully (FR)**

(74) Mandataire: **Thibault, Jean-Marc
    Cabinet Beau de Loménie
    51, Avenue Jean Jaurès
    B.P. 7073
    69301 Lyon Cédex 07 (FR)**

(56) Documents cités:
  **EP-A- 0 003 095          WO-A-93/16395
  DE-A- 3 322 500          DE-A- 3 544 289**

**Description**

La présente invention concerne le domaine technique de la localisation dans l'espace, à partir d'une détection acoustique, d'une arme à feu au sens général, par exemple du type individuel, telle que fusil ou carabine, ou armes collectives, telles que mitrailleuses, mortiers ou canons.

L'objet de l'invention vise, plus précisément, le domaine de la localisation, à partir d'une détection acoustique, d'armes à feu tirant des projectiles avec une célérité initiale, de préférence mais non exclusivement, supersonique.

Il apparaît de plus en plus le besoin, notamment face à des agressions de guérillas, de conflits civils armés ou dans le cadre d'interventions humanitaires en zones instables, de pouvoir disposer de moyens techniques permettant de localiser des armes à feu qui sont susceptibles de causer un préjudice, aussi bien pour des personnes que pour des biens. Il a été constaté ainsi que des tireurs, souvent isolés, étaient à même de constituer un réel danger auquel il apparaît difficile d'apporter une solution efficace de protection.

Il a donc été développé des systèmes notamment acoustiques, pour avertir les personnes du fait qu'elles sont la cible d'armes à feu. Par exemple, les hélicoptères sont équipés d'un système de détection acoustique, de manière à avertir l'équipage qu'il est la cible d'armes à feu, alors qu'il est incapable d'entendre dans son habitacle le bruit correspondant, en raison de l'intensité sonore régnant à l'intérieur de l'hélicoptère.

Il apparaît, toutefois, que ce dispositif constitue uniquement un moyen d'avertissement de l'existence de tirs, qui se trouve incapable d'indiquer la position de l'arme, de sorte que les personnes visées ne sont pas en mesure de déterminer leur meilleure position pour se mettre à l'abri des tirs et pour neutraliser l'agresseur.

Par ailleurs, il est connu par le document **WO-A-93/16395,** un procédé et un dispositif pour déterminer la trajectoire d'un projectile présentant une vitesse initiale supersonique. Ce document propose de mettre en oeuvre des moyens de détection acoustique constitués par trois balises formées chacune de trois capteurs acoustiques. Les capteurs génèrent en fonction de l'onde de choc ou cône de Mach, des signaux qui sont utilisés par des moyens de calcul, afin de déterminer des vecteurs unitaires de pointage ou de visée.

Dans le même sens, il est connu par le document **DE-A-33 22 500,** un procédé de détermination passive de données de repérage comme la vitesse, la distance et le trajet d'un véhicule rayonnant de l'énergie ondulatoire. Le procédé consiste à mettre en oeuvre au moins deux transducteurs recevant l'énergie ondulatoire et destinés à délivrer des signaux soumis continuellement à une analyse de fréquence, avec une mémorisation des intensités en fonction de la fréquence et du temps pour permettre de déterminer les données de repérage du véhicule.

Il apparaît donc le besoin de pouvoir disposer de moyens adaptés pour localiser avec précision une arme à feu, afin de prendre des mesures adaptées pour la protection des personnes ou des biens.

L'objet de l'invention vise donc à satisfaire ce besoin en proposant un procédé pour localiser une arme à feu tirant des projectiles, à l'aide d'une antenne de détection acoustique comportant i microphones (avec i supérieur ou égal à 3), espacés les uns des autres selon des mesures connues, consistant à détecter et enregistrer dans le temps, des signaux et leurs décalages temporels délivrés par les i microphones et représentatifs du bruit de source des ondes acoustiques, et à traiter les signaux et leurs décalages temporels.

Pour atteindre cet objectif, le procédé consiste pour localiser en tant que source d'ondes acoustiques, une arme à feu tirant des projectiles :

- à détecter et enregistrer, dans le temps, des signaux et leurs décalages temporels, délivrés par les i microphones et représentatifs de l'onde sonore émise dans le cône de Mach engendré par un projectile possédant une célérité initiale supersonique,
- à détecter et enregistrer, dans le temps, des signaux et leurs décalages temporels, délivrés par les i microphones et représentatifs du bruit de bouche de l'arme à feu,
- et à traiter les signaux représentatifs de l'onde sonore et leurs décalages temporels, de manière à déterminer, à l'aide des signaux représentatifs du bruit de bouche et des décalages temporels correspondants, au moins la direction selon laquelle l'arme à feu est placée.

Selon une variante de réalisation, les signaux et leurs décalages temporels sont traités par une méthode goniométrique ou interférométrique.

L'objet de l'invention vise également à proposer un dispositif pour localiser une arme à feu tirant des projectiles à l'aide d'une antenne de détection acoustique comportant au moins i microphones, espacés les uns des autres selon des mesures connues. Selon l'invention, le dispositif comporte :

- un étage de conditionnement pour les microphones,
- et une unité de traitement et d'affichage comportant :

  • des moyens de détection et d'enregistrement dans le temps, à partir des signaux délivrés par les i microphones, les signaux et leurs décalages temporels, représentatifs de l'onde sonore émise dans le cône de Mach engendré par un projectile, possédant une célérité initiale supersonique,
  • des moyens de détection et d'enregistrement dans le temps, à partir des signaux délivrés par les i microphones, les signaux et leurs décalages temporels, représentatifs du bruit de bouche de l'arme à feu,

- des moyens de traitement des signaux et de leurs décalages temporels, représentatifs de l'onde sonore, de façon à déterminer, à l'aide des signaux représentatifs du bruit de bouche et des décalages temporels correspondants, au moins la direction selon laquelle l'arme à feu est placée,

- et des moyens d'affichage indiquant au moins la direction selon laquelle l'arme à feu est placée.

Diverses autres caractéristiques ressortent de la description faite ci-dessous en référence aux dessins annexés qui montrent, à titre d'exemples non limitatifs, des formes de réalisation et de mise en oeuvre de l'objet de l'invention.

La **fig. 1** est une vue schématique montrant un exemple de réalisation d'un dispositif de localisation conforme à l'invention.

La **fig. 2** est un dessin illustrant le principe de détection du dispositif de localisation selon l'invention.

La **fig. 3** illustre un exemple de signaux à partir desquels est mis en oeuvre le procédé selon l'invention.

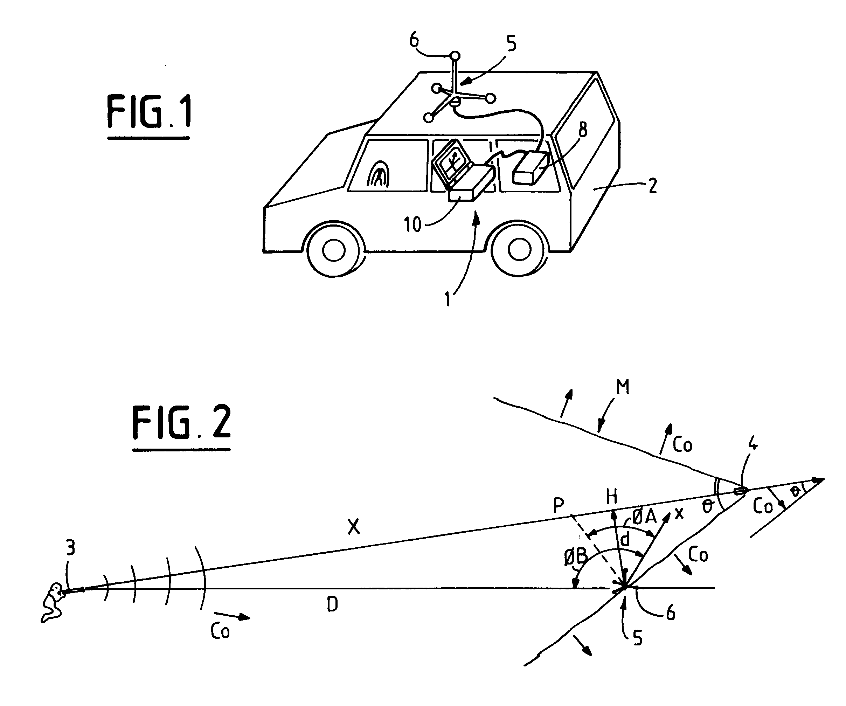

Tel que cela apparaît plus précisément aux **fig. 1** et **2,** l'objet de l'invention concerne un dispositif **1** placé en un lieu fixe ou, comme dans l'exemple illustré, adapté sur un véhicule **2**. Le dispositif **1** est conçu pour localiser une arme à feu **3** tirant un projectile **4**. L'arme à feu **3** est de tous types connus susceptible de tirer des projectiles **4**. Dans l'exemple préféré décrit ci-après, le projectile **4** possède une vitesse initiale **c** supersonique.

Le dispositif **1** selon l'invention comporte une antenne **5** de détection acoustique permettant de détecter les ondes acoustiques engendrées par le tir du projectile **4**. Le dispositif **1** comporte i microphones **6** (avec i supérieur ou égal à 3), espacés les uns des autres selon des mesures connues. De préférence, l'antenne **5** est constituée de 3 à 5 microphones **6** déployés à quelques dizaines de centimètres les uns ds autres. Tel que cela apparaît plus précisément à la **fig. 2**, lors de l'envoi du projectile **4** en direction de l'antenne **5,** selon un axe **X,** les microphones **6** détectent, dans un premier temps, l'apparition d'une onde sonore émise de manière homogène dans un cône **M**, dont le sommet est formé par le projectile **4**. Le cône **M** est connu habituellement sous le nom de cône de Mach et présente un angle θ au sommet du cône, tel que :

$$\theta = \text{Arc sin } c_0/c,$$

avec **c₀** la vitesse du son et c la vitesse moyenne du projectile **4**. Cette onde sonore, désignée comme Bruit **A,** correspond à un son bref et intense qui peut être caractérisé par un claquement assez sec. L'antenne **5** détecte le bruit à l'instant qui correspond au temps de trajet du projectile **4**, entre l'arme **3** et un point **P**, auquel s'ajoute le temps de propagation du son entre le point **P** et l'antenne **5**. Il est à noter que le point **P** est défini comme le point d'intersection sur l'axe **X,** de la droite de direction $\vec{c}_0$ et dont le point d'intersection avec le cône de Mach coïncide avec l'antenne **5.** En notant **D,** la distance entre l'arme **3** et l'antenne **5,** le bruit **A** à l'antenne **5** arrive à l'instant **t_A,** tel que :

$$t_A = t_0 + (D - d.\tan \theta) /c + d / (c_0 .\cos \theta)$$

où **c** est la vitesse moyenne du projectile, **t₀** l'instant de tir et **d** l'imprécision de tir correspondant à la distance entre l'antenne **5** et le point **H** d'intersection de la perpendiculaire à l'axe **X** passant par l'antenne **5**.

En supposant grande la distance **D** devant la distance de passage **d** du tir, l'instant **t_A** peut s'exprimer de la manière suivante :

$$t_A \simeq t_0 + (D/c).$$

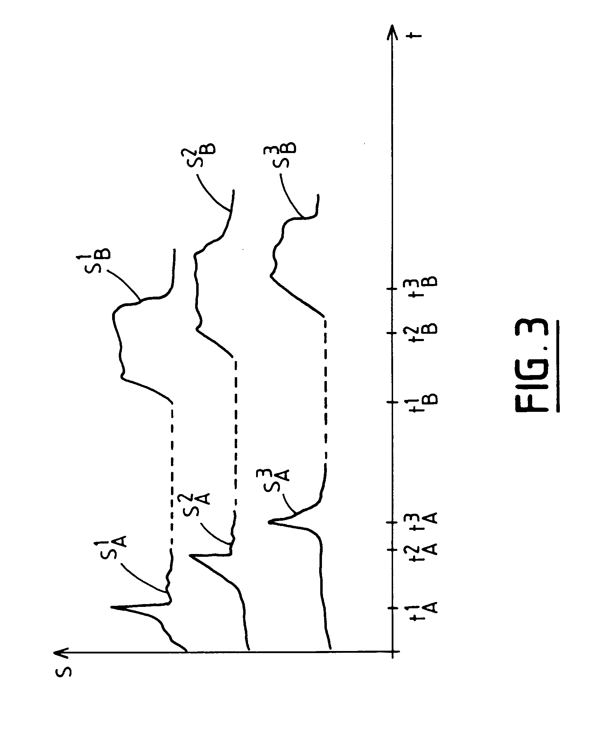

Tel que cela apparaît plus précisément à la **fig. 3**, les signaux **S** délivrés par les microphones **6,** en fonction du temps **t,** présentent un pic et un décalage temporel $t^i_A$ entre eux en raison de leur position relative différente par rapport au Bruit A. Dans l'exemple illustré, trois microphones **6** sont utilisés permettant de délivrer des signaux $S^1_A$, $S^2_A$, $S^3_A$ à des instants respectivement $t^1_A$, $t^2_A$, $t^3_A$. De tels signaux sont ainsi représentatifs de l'onde sonore **A** émise dans le cône de Mach **M** engendré par le projectile **4**. L'invention vise donc à détecter et à enregistrer les signaux $S^i_A$ et leur décalage temporel $t^i_A$.

L'objet de l'invention vise également à détecter et à enregistrer, dans le temps, des signaux $S^i_B$ et leurs décalages temporels respectifs $t^i_B$. Les signaux $S^i_B$ sont délivrés par les microphones **6** et sont représentatifs du bruit de bouche **B** de l'arme à feu. Dans l'exemple illustré, le dispositif enregistre les signaux délivrés respectivement par chacun des trois microphones, à savoir les signaux $S^1_B$, $S^2_B$, $S^3_B$, ainsi que leurs décalages temporels respectifs $t^1_B$, $t^2_B$, $t^3_B$. D'une manière classique, le bruit de bouche **B** d'une arme à feu est d'origine pyrotechnique et se trouve lié à la dilatation des gaz de combustion de la charge propulsive dans le canon de l'arme. Le bruit de bouche **B** de l'arme, dit Bruit **B,** est émis à partir de l'arme **3** à l'instant **t₀** et se propage, sous une forme acoustique, en ligne droite de l'emplacement de l'arme **3** jusqu'à l'antenne **5**. L'instant d'arrivée **t_B** de ce bruit **B** est donc tel que :

$$t_B = t_0 + (D/c_0).$$

Conformément à l'invention, les signaux $S^i_A$ et $S^i_B$, ainsi que leurs décalages temporels $t^i_A$ et $t^i_B$, sont traités de manière à déterminer au moins la direction selon laquelle l'arme à feu est placée. Le procédé vise ainsi à déterminer au moins l'angle de gisement $\phi_B$, à savoir l'angle défini entre un axe de référence **x** donnée et la direction du bruit de bouche **B** dans le plan horizontal, de sorte qu'il peut être obtenu la direction d'où provient le projectile **4**.

Selon une caractéristique avantageuse de l'invention, le procédé vise à traiter les signaux $S^i_A$ et $S^i_B$ et leurs décalages temporels $t^i_A$ et $t^i_B$ à l'aide d'une méthode goniométrique ou interférométrique classique et connue de l'homme du métier, afin d'obtenir la détermination de l'angle $\phi_B$.

Selon une autre caractéristique de l'invention, le procédé de traitement peut être adapté de manière à déterminer la vitesse **c** du projectile **4**, à savoir :

$$c = c_0/\sin (\phi_B - \phi_A),$$

si la distance de passage **d** < < **D** et avec $c_0$ étant la vitesse du son et $\phi_A$ et $\phi_B$ les angles respectifs en gisement des bruits **A** et **B**.

Le procédé selon l'invention est également apte à assurer la détermination de la distance **D** de l'arme à feu **3** par rapport à l'antenne de détection **5**. La distance **D** est telle que :

$$D = [\![ (t_A - t_B) / (c_0 - c) ]\!].c_0.c,$$

si la distance de passage **d** < < **D** et où c est la vitesse moyenne du projectile.

Il est à noter que le procédé selon l'invention peut être mis en oeuvre pour déterminer, si besoin, la nature du projectile **4** et de l'arme **3**. A cet effet, des tables de tir, caractérisant divers types d'armes à partir de la vitesse du projectile en fonction de la distance, sont enregistrées et servent de référence ou de comparaison au signal de bruit de bouche détecté, de la vitesse et de la distance **D** mesurées.

Le procédé selon l'invention permet ainsi de fournir, dès le premier tir, un ensemble d'informations essentielles pour permettre la réaction la plus appropriée au tir subi. Un tel procédé présente ainsi l'avantage de déterminer la direction précise du tireur, voire la vitesse du projectile, la distance du tireur et/ou la nature du projectile et de l'arme.

La **fig. 1** illustre, plus particulièrement, un dispositif permettant de mettre en oeuvre le procédé selon l'invention. Le dispositif **1** selon l'invention comporte une antenne acoustique **5** munie d'au moins trois microphones **6** reliés, par l'intermédiaire d'un étage **8** de conditionnement des microphones, à une unité **10** de traitement et d'affichage comportant des moyens adaptés pour mettre en oeuvre le procédé de localisation selon l'invention. Ainsi, l'unité de traitement et d'affichage **10** comporte des moyens programmés assurant une détection et un enregistrement dans le temps, des signaux $S^i_A$, $S^i_B$ et de leurs décalages temporels $t^i_A$ et $t^i_B$ délivrés par les **i** microphones et représentatifs respectivement de l'onde sonore **A** émise dans le cône de Mach engendré par un projectile et le bruit de bouche **B** de l'arme à feu. L'unité **10** comporte également des moyens des traitement des signaux $S^i_A$ et $S^i_B$ et de leurs décalages temporels $t^i_A$ et $t^i_B$, de manière à déterminer au moins la direction selon laquelle l'arme à feu est placée. L'unité **10** comprend également des moyens d'affichage se présentant sous toutes formes appropriées indiquant la direction selon laquelle l'arme à feu **3** est placée.

De préférence, l'unité **10** comporte également des moyens de traitement permettant de déterminer la vitesse **c** du projectile, la distance **D** de l'arme à feu, ainsi que des moyens d'enregistrement de tables de tir caractérisant divers types d'armes, de manière à permettre la détermination du type de projectile et d'arme utilisés en comparaison avec la forme du bruit de bouche et de la distance **D** mesurées.

Dans la description qui précède, la localisation de l'arme à feu est réalisée à partir des signaux représentatifs du bruit de bouche **B** de l'arme à feu et de l'onde sonore **A** émise dans le cône de Mach et engendré par un projectile **4** possédant une célérité initiale supersonique. Bien entendu, le procédé selon l'invention permet également de localiser une arme à feu tirant un projectile **4** possédant une célérité initiale subsonique n'engendrant pas le cône de Mach **M**. Dans ce cas, la localisation est effectuée uniquement à l'aide des signaux $s^i_B$ représentatifs du bruit de bouche **B** et de leurs décalages temporels $t^i_B$.

L'invention n'est pas limitée aux exemples décrits et représentés, car diverses modifications peuvent y être apportées sans sortir de son cadre.

## Revendications

1. Procédé pour localiser une source d'ondes acoustiques, à l'aide d'une antenne de détection acoustique (**5**) comportant microphones (**6**), avec **i** supérieur ou égal à 3, espacés les uns des autres selon des mesures connues, consistant à détecter et enregistrer dans le temps, des signaux et leurs décalages temporels délivrés par les **i** microphones et représentatifs du bruit de source des ondes acoustiques, et à traiter les signaux et leurs décalages temporels,

   **caractérisé en ce qu'**il consiste pour localiser en tant que source d'ondes acoustiques, une arme à feu tirant des projectiles (**4**) :

   - à détecter et enregistrer, dans le temps, des signaux ($S^i_A$) et leurs décalages temporels ($t^i_A$), délivrés par les $\underline{i}$ microphones (**6**) et représentatifs de l'onde sonore **A** émise dans le cône de Mach engendré par un projectile (**4**) possédant une célérité initiale supersonique,

- à détecter et enregistrer, dans le temps, des signaux ($S^i_B$) et leurs décalages temporels ($t^i_B$), délivrés par les $\underline{i}$ microphones (**6**) et représentatifs du bruit de bouche **B** de l'arme à feu,

- et à traiter les signaux ($S^i_A$) représentatifs de l'onde sonore **A** et leurs décalages temporels ($t^i_A$), de manière à déterminer, à l'aide des signaux ($S^i_B$) représentatifs du bruit de bouche **B** et des décalages temporels correspondants ($t^i_B$), au moins la direction ($\phi_B$) selon laquelle l'arme à feu est placée.

2. Procédé selon la revendication 1, **caractérisé en ce qu'**il consiste à traiter les signaux ($S^i_A$, $S^i_B$) et leurs décalages temporels ($t^i_A$, $t^i_B$), à l'aide d'une méthode goniométrique ou interférométrique.

3. Procédé selon la revendication 1 ou 2, **caractérisé en ce qu'**il consiste à assurer un traitement des mesures, de manière à déterminer la vitesse (**c**) du projectile égale à : $c_0/sin$ ($\phi_B$-$\phi_A$), avec $c_0$ étant la vitesse du son et ($\phi_A$) et ($\phi_B$), les angles en gisement des bruits **A** et **B**.

4. Procédé selon la revendication 3, **caractérisé en ce qu'**il consiste à assurer un traitement des mesures, de manière à déterminer la distance (**D**) de l'arme à feu par rapport à l'antenne de détection, avec

$$D = [(t_A-t_B) / (c_0-c)].c_0.c,$$

où $t_A$ et $t_B$ sont les instants respectifs de détection des bruits **A** et **B**.

5. Procédé selon la revendication 3 ou 4, **caractérisé en ce qu'**il consiste, à partir, d'une part, de la forme du signal de bruit de bouche en fonction de la vitesse et de la distance (**D**) et, d'autre part, de tables de tir préenregistrées caractérisant divers types d'armes à partir de la vitesse du projectile en fonction de la distance, à déterminer le type de projectile et d'arme utilisés.

6. Dispositif pour localiser une arme à feu (**3**) tirant des projectiles (**4**) à l'aide d'une antenne (**5**) de détection acoustique comportant au moins $\underline{i}$ microphones (**6**) espacés les uns des autres selon des mesures connues, avec $i \geq 3$,

     **caractérisé en ce qu'**il comporte :

- un étage (**8**) de conditionnement pour les microphones (**6**),

- et une unité (**10**) de traitement et d'affichage comportant :

  • des moyens de détection et d'enregistrement dans le temps, à partir des signaux délivrés par les $\underline{i}$ microphones (**6**), les signaux ($S^i_A$) et leurs décalages temporels ($t^i_A$), représentatifs de l'onde sonore **A** émise dans le cône de Mach engendré par un projectile (**4**), possédant une célérité initiale supersonique,

  • des moyens de détection et d'enregistrement dans le temps, à partir des signaux délivrés par les $\underline{i}$ microphones (**6**), les signaux ($S^i_B$) et leurs décalages temporels ($t^i_B$), représentatifs du bruit de bouche **B** de l'arme à feu,

  • des moyens de traitement des signaux ($S^i_A$) et de leurs décalages temporels ($t^i_A$), représentatifs de l'onde sonore **A,** de façon à déterminer, à l'aide des signaux ($S^i_B$) représentatifs du bruit de bouche **B** et des décalages temporels correspondants ($t^i_B$), au moins la direction ($\phi_B$) selon laquelle l'arme à feu est placée,

  • et des moyens d'affichage indiquant au moins la direction selon laquelle l'arme à feu est placée.

7. Dispositif selon la revendication 6, **caractérisé en ce que** les moyens de traitement mettent en oeuvre une méthode goniométrique ou interférométrique.

8. Dispositif selon la revendication 5 ou 6, **caractérisé en ce que** les moyens de traitement permettent de déterminer la vitesse (**c**) du projectile égale à :

     $c_0/sin$ ($\phi_B$-$\phi_A$), avec $c_0$ étant la vitesse du son et ($\phi_A$) et ($\phi_B$), les angles en gisement des bruits **A** et **B,** et **en ce que** les moyens d'affichage sont adaptés pour assurer l'affichage de la vitesse du projectile.

9. Dispositif selon la revendication 8, **caractérisé en ce que** les moyens de traitement permettent de déterminer la distance (**D**) de l'arme à feu par rapport à l'antenne de détection, avec

$$D = [(t_A-t_B) / (c_0-c)].c_0.c,$$

où $t_A$ et $t_B$ sont les instants respectifs de détection des bruits **A** et **B,** et **en ce que** les moyens d'affichage sont adaptés pour assurer l'affichage de la distance de l'arme à feu.

10. Dispositif selon la revendication 5 ou 6, **caractérisé en ce que** l'unité de traitement et d'affichage comporte des moyens d'enregistrement de tables de tir caractérisant divers types d'armes, et **en ce que** les moyens de traitement, à partir de la forme du bruit de bouche et de la distance (**D**), permettant de déterminer le type de projectile et d'arme utilisé.

## Claims

1. A method of locating soundwaves, the method making use of an acoustic detection antenna (5) that comprises $\underline{i}$ microphones (6), where $\underline{i}$ is not less than three, which microphones are spaced apart from one another in known manner, the method consisting in detecting and recording in time, signals and the time offsets thereof as delivered by the $\underline{i}$ microphones and representative of the source noise of the soundwaves, and in processing the signals and their time offsets,

   the method being **characterized in that**, in order to locate a firearm firing projectiles (4) and constituting the soundwave source, it consists in:

   detecting and recording in time, the signals $S^i_A$ and the time offsets $t^i_A$ thereof as delivered by the $\underline{i}$ microphones (6) and representative of the soundwave A emitted by the Mach cone generated by a projectile (4) that has supersonic muzzle velocity;

   detecting and recording in time, the signals $S^i_B$ and the time offsets $t^i_B$ thereof as delivered by the $\underline{i}$ microphones (6) and representative of the muzzle noise (B) of the firearm; and

   processing said signals $S^i_A$ representative of the soundwave A and the time offsets $t^i_A$ thereof so as to determine, with the help of the signals $S^i_B$ representative of the muzzle noise B and the corresponding time offsets $t^i_B$, at least the direction $\varnothing_B$ in which the firearm is located.

2. A method according to claim 1, **characterized in that** it consists in processing the signals $S^i_A$, $S^i_B$ and their time offsets $t^i_A$, $t^i_B$ by using an interferometer or a goniometric direction finder technique.

3. A method according to claim 1 or claim 2, **characterized in that** it consists in processing the measurements in such a manner as to determine the velocity $\underline{c}$ of the projectile which is equal to $c_0/\sin(\varnothing_B-\varnothing_A)$, where $c_0$ is the speed of sound, and $\varnothing_A$ and $\varnothing_B$ are the azimuth angles of the Mach cone noise and of the muzzle noise (A and B).

4. A method according to claim 3, **characterized in that** it consists in processing the measurements in such a manner as to determine the range D to the firearm from the detection antenna using

$$D = [(t_A-t_b)/(c_0-c)].c_0.c$$

where $t_A$ and $t_B$ are the respective instants at which the Mach cone noise (A) and the muzzle noise (B) are detected.

5. A method according to claim 3 or claim 4, **characterized in that** it consists of using firstly the form of the muzzle noise signal as a function of velocity and range D, and secondly prerecorded firing tables **characterizing** various types of weapon on the basis of projectile speed as a function of range, to determine the type of projectile and the type of weapon used.

6. Apparatus for locating a firearm (3) firing projectiles (4), the apparatus using an acoustic detection antenna (5) that includes at least $\underline{i}$ microphones (6), where $i \cdot 3$, where the microphones are spaced apart from one another in known manner, the apparatus being **characterized in that** it comprises:

   a microphone conditioning stage (8); and
   a processing and display unit (10) comprising:

   means for detecting and recording in time, on the basis of the signals delivered by the $\underline{i}$ microphones (6), signals $S^i_A$ and the time offsets $t^i_A$ thereof that are representative of the soundwave (A) emitted by the Mach cone generated by a projectile (4) that has supersonic muzzle velocity;

   means for detecting and recording in time, on the basis of the signals delivered by the $\underline{i}$ microphones (6), the signals $S^i_B$ and the time offsets $t^i_B$ thereof that are representative of the muzzle noise (B) of the firearm;

   means for processing the signals $S^i_A$ and the time offsets $t^i_A$ thereof that are representative of the soundwave A so as to determine, with the help of the signals $S^i_B$ representative of the muzzle noise B and the corresponding time offsets $t^i_B$, at least the direction $\varnothing_B$ in which the firearm is located; and

   display means indicating at least the direction in which the firearm is located.

7. Apparatus according to claim 6, **characterized in that** the processing means implement an interferometer or a goniometric direction-finding technique.

8. Apparatus according to claim 5 or claim 6, **characterized in that** the processing means enable the velocity $\underline{c}$ of the projectile to be determined which is equal to $c_0/\sin(\varnothing_B-\varnothing_A)$, where $c_0$ is the speed of sound and $\varnothing_A$ and $\varnothing_B$ are the azimuth angles of the Mach cone noise (A) and the muzzle noise (B) respectively, and **in that** the display means are adapted to display the velocity of the projectile.

9. Apparatus according to claim 8, **characterized in that** the processing means enable the range D to the firearm from the detection antenna to be determined, where:

$$D = [(t_A - t_b)/(c_0 - c)].c_0.c$$

where $t_A$ and $t_B$ are the respective instants at which the Mach cone noise (A) and the muzzle noise (B) are detected, and **in that** the display means are adapted to display the range to the firearm.

10. Apparatus according to claim 5 or claim 6, **characterized in that** the processing and display unit includes means for recording firing tables that characterize various types of weapon, and **in that** the processor means enable the type of projectile and the type of weapon used to be determined on the basis of the form of the muzzle noise and the range D.

**Patentansprüche**

1. Verfahren zum Orten einer Schallquelle mit Hilfe einer Antenne zur Schallerfassung (5) mit i Mikrophonen (6), wobei i größer oder gleich 3 ist, die mit bekannten Maßen voneinander beabstandet sind, das darin besteht, Signale und ihre zeitlichen Verzögerungen zu erfassen und aufzuzeichnen, die von den i Mikrophonen geliefert werden und die für das Ursprungsgeräusch der Schallwellen charakteristisch sind, und die Signale und ihre zeitlichen Verzögerungen zu verarbeiten,
**dadurch gekennzeichnet, daß** es zum Orten einer Geschosse (4) abschießenden Schußwaffe als Schallwelle darin besteht,

- Signale ($S^i_A$) und ihre zeitlichen Verzögerungen ($t^i_A$) zeitlich zu erfassen und aufzuzeichnen, die von den i Mikrophonen (6) geliefert werden und die für die Schallwelle A charakteristisch sind, die sich in dem Machschen Kegel ausbreitet, welcher durch ein Geschoß (4) erzeugt wird, das eine anfängliche Überschallgeschwindigkeit aufweist,
- Signale und ihre zeitlichen Verzögerungen zeitlich zu erfassen und aufzuzeichnen, die von den i Mikrophonen (6) geliefert werden und die für das Mündungsgeräusch B der Schußwaffe charakteristisch sind,
- und die für die Schallwelle A charakteristischen Signale ($S^i_A$) und ihre zeitlichen Verzögerungen ($t^i_A$) zu verarbeiten, um mit Hilfe der für das Mündungsgeräusch B charakteristischen Signale ($S^i_B$) und der entsprechenden zeitlichen Verzögerungen ($t^i_B$) wenigstens die Richtung ($\phi_B$) zu bestimmen, in der sich die Schußwaffe befindet.

2. Verfahren nach Anspruch 1,
**dadurch gekennzeichnet, daß** es darin besteht, die Signale ($S^i_A$, $S^i_B$) und ihre zeitlichen Verzögerungen ($t^i_A$, $t^i_B$) mit Hilfe einer goniometrischen und interferometrischen Methode zu verarbeiten.

3. Verfahren nach Anspruch 1 oder 2,
**dadurch gekennzeichnet, daß** es darin besteht, eine Verarbeitung der Messungen sicherzustellen, um die Geschwindigkeit (c) des Geschosses gleich $c_o/\sin(\phi_B - \phi_A)$ zu bestimmen, wobei $c_o$ die Schallgeschwindigkeit ist und ($\phi_A$) und ($\phi_B$) die Peilwinkel der Geräusche A und B sind.

4. Verfahren nach Anspruch 3,
**dadurch gekennzeichnet, daß** es darin besteht, eine Verarbeitung der Messungen sicherzustellen, um die Entfernung (D) der Schußwaffe in bezug auf die Erfassungsantenne mit

$$D = [(t_A - t_B)/(c_o - c)] \cdot c_o \cdot c$$

zu bestimmen, wobei $t_A$ und $t_B$ jeweils die Augenblicke der Erfassung der Geräusche A und B sind.

5. Verfahren nach Anspruch 3 oder 4,
**dadurch gekennzeichnet, daß** es darin besteht, die Art des verwendeten Geschosses und der benutzten Schußwaffe zu bestimmen, einerseits anhand der Form des Signals des Mündungsgeräusches in Abhängigkeit von der Geschwindigkeit und der Entfernung (D) und andererseits anhand bereits gespeicherter Schußtafeln, die verschiedene Waffentypen anhand der Geschwindigkeit des Geschosses in Abhängigkeit von der Entfernung kennzeichnen.

6. Vorrichtung zum Orten einer Geschosse (4) abfeuernden Schußwaffe (3) mit Hilfe einer Antenne (5) zur Schallerfassung mit wenigstens i Mikrophonen (6), die voneinander mit bekannten Maßen beabstandet sind, wobei $i \geq 3$ ist,
**dadurch gekennzeichnet, daß** sie folgendes umfaßt:

- eine Stufe (8) zur Signalkonditionierung für die Mikrophone (6),
- und eine Einheit (10) zur Verarbeitung und Anzeige, die folgendes aufweist:

- Mittel zur zeitlichen Erfassung und Aufzeichnung anhand von Signalen, die von i Mikrophonen (6) ausgestrahlt werden, wobei die Signale ($S^i_A$) und ihre zeitlichen Verzögerungen ($t^i_A$) für die Schallwelle A charakteristisch sind, die sich in dem Machschen Kegel ausbreitet, welcher durch ein Geschoß (4) erzeugt wird, das eine anfängliche Überschallgeschwindigkeit aufweist,
- Mittel zur zeitlichen Erfassung und Aufzeichnung anhand von Signalen, die von i Mikrophonen (6) ausgestrahlt werden, wobei die Signale ($S^i_B$) und ihre zeitlichen Verzögerungen ($t^i_B$) für das Mündungsgeräusch B der Schußwaffe charakteristisch sind,
- Mittel zur Verarbeitung der für die Schallwelle A charakteristischen Signale ($S^i_A$) und ihrer zeitlichen Verzögerungen ($t^i_A$), um mit Hilfe der für das Mündungsgeräusch B charakteristischen Signale ($S^i_B$) und der entsprechenden zeitlichen Verzögerungen wenigstens eine Richtung ($\phi_B$) zu bestimmen, in der sich die Schußwaffe befindet,
- und Mittel zur Anzeige, die wenigstens die Richtung angeben, in der sich die Schußwaffe befindet.

7. Vorrichtung nach Anspruch 6, **dadurch gekennzeichnet, daß** die Verarbeitungsmittel eine goniometrische und interferometrische Methode anwenden.

8. Vorrichtung nach Anspruch 5 oder 6, **dadurch gekennzeichnet, daß** die Verarbeitungsmittel es erlauben, die Geschwindigkeit (c) des Geschosses gleich $c_o/\sin(\phi_B-\phi_A)$ zu bestimmen, wobei $c_o$ die Schallgeschwindigkeit ist und ($\phi_A$) und ($\phi_B$) die Peilwinkel der Geräusche A und B sind, und daß die Anzeigemittel so angepaßt sind, daß die Anzeige der Geschoßgeschwindigkeit sichergestellt ist.

9. Vorrichtung nach Anspruch 8, **dadurch gekennzeichnet, daß** die Verarbeitungsmittel es erlauben, die Entfernung (D) der Schußwaffe in bezug auf die Erfassungsantenne mit

$$D = [(t_A - t_B)/(c_o - c)]\cdot c_o\cdot c$$

zu bestimmen, wobei $t_A$ und $t_B$ jeweils die Augenblicke der Erfassung der Geräusche A und B sind, und daß die Anzeigemittel so angepaßt sind, daß die Anzeige der Entfernung der Schußwaffe sichergestellt ist.

10. Vorrichtung nach Anspruch 5 oder 6, **dadurch gekennzeichnet, daß** die Einheit zur Verarbeitung und Anzeige Mittel zum Speichern von Schußtafeln umfaßt, die verschiedene Waffentypen kennzeichnen, und daß die Verarbeitungsmittel es anhand der Form des Mündungsgeräusches und der Entfernung (D) erlauben, die Art des verwendeten Geschosses und der benutzten Waffe zu bestimmen.

EP 0 684 485 B1

# FIG.1

# FIG.2

## FIG. 3

EP 0 684 485 B1